# EUROPEAN PATENT APPLICATION

(11) **EP 4 810 945 A1**
(43) Date of publication of application: **23.09.2026**
(21) Application number: 25305365.6
(22) Date of filing: 18.03.2025
(51) Int. Cl.: G01N 21/95, G01N 21/21, G01N 21/23, G01N 21/956, G01N 21/84, G01N 21/88

(54) **METHOD AND DEVICE FOR POLARIMETRIC CRYSTALLOGRAPHIC DEFECT DETECTION**

(71) Applicant: UNITY SEMICONDUCTOR, 38330 Montbonnot-Saint-Martin (FR)
(72) Inventor: HAKOBYAN, Davit, 38330 SAINT ISMIER (FR)
(74) Representative: IPAZ

(57) **Abstract**

The invention relates to a method (200) for detecting crystallographic defects in a crystalline material such as a semiconductor substrate, the defects generating local anisotropy of optical properties in the crystalline material, the method comprising the following steps:
- illuminating (202) the crystalline material,
- analysing (204) the polarisation of the light issued from the crystalline material by means of at least one polarisation analyser, the at least one polarisation analyser being set according to at least four different polarisation states,
- measuring (206) an intensity spatial distribution of the light in the at least four different polarisation states in a field of view,
- calculating (208) at least Stokes parameters S₂, S₃ based on the measured luminous intensities for the field of view,
- determining (210) a retardance map based on said Stokes parameters S₂, S₃ for the field of view,
- identifying (212) defects in the crystalline material based on patterns in the retardance map.

The invention also relates to a polarimetric inspection device.

## Description

### Field of the invention

The present invention relates to a method for detecting crystallographic defects in crystalline materials or substrates. The crystallographic defects generate a local anisotropy of optical properties in the crystalline material or substrate. The invention also relates to a device implementing such a method.

The field of the invention is the field of inspection and characterization of semiconductor substrates and components by optical methods.

### Background

Compound semiconductor wafers, and in particular silicon carbide (SiC) wafers, are key elements in high-performance semiconductor applications, for example, in the automotive, renewable energy, and telecommunications fields. Such materials exhibit a wide bandgap, superior thermal conductivity, and high breakdown voltage, which enable their use in demanding environments. However, in contrast to silicon wafers, such compound material wafers present a high density of crystallographic defects, including threading edge dislocations (TEDs), threading screw dislocations (TSDs), threading mixed dislocations (TMDs), micropipes, and prismatic slips. These defects, arising during crystal growth and wafer processing, adversely affect the performance, efficiency, and reliability of devices.

The nature, distinct properties, and distribution of the defects can be investigated with a variety of invasive or non-invasive, optical or non-optical semiconductor wafer inspection techniques.

Non-optical inspection techniques are mainly used in the characterization of crystallographic defects within 4H-SiC wafers. X-ray topography is a main approach for defect analysis and non-destructive imaging of dislocations such as TEDs, TMDs, and TSDs. However, X-ray topography alone may not always suffice for precise differentiation of defect types.

An invasive non-optical method is chemical etching, typically paired with scanning electron microscopy (SEM). Chemical etching selectively dissolves material around defects, creating well-defined etch pits that reveal their locations and morphologies. SEM then captures images of these pits, allowing for detailed characterization of defects such as micropipes and dislocation networks.

Transmission electron microscopy (TEM) is another invasive non-optical technique used to achieve atomic-scale resolution of defect structures such as dislocations and stacking faults in 4H-SiC wafers.

However, these invasive methods are destructive and time-intensive, making them unsuitable for high-throughput, industrial applications.

Optical inspection techniques offer high throughput and preserve sample integrity. They include photoluminescence (PL) imaging, phase-contrast microscopy (PCM), polarised light microscopy (PLM), and cross-polarised imaging.

Photoluminescence imaging uses radiative recombination events to detect defects by analysing the emitted light variations. However, PL may not differentiate defect types like TEDs and TSDs, or even detect TED due to their small scale.

Phase-Contrast Microscopy allows for defect detection, and in particular, for distinguishing between TEDs and TSDs, using refractive index variations caused by localized stress fields in the crystal. However, its reliance on specific optical configurations and sensitivity to surface conditions limits its standalone effectiveness for comprehensive defect characterization.

Polarised Light Microscopy uses birefringence effects induced by dislocations to detect defects. When light passes through stress-altered regions in the wafer, its polarisation state changes, creating distinct patterns that reveal defect locations. According to these methods, the light incident on the sample is polarised in a linear or circular way. The light exiting the sample is then filtered by a polariser in a crossed orientation, so as to detect the depolarised or orthogonally polarized component of light to that of incident. These methods may improve the contrast and allow for a more detailed analysis of defects. However, PLM may not distinguish between closely related dislocation types, particularly in regions with overlapping strain fields, reducing its reliability as a singular method for defect classification.

It is also known to combine several methods to achieve proper identification and characterization of crystallographic defects. However, these hybrid approaches are inherently resource-intensive, time-consuming, and impractical for industrial-scale applications.

In conclusion, current inspection techniques do not provide a single, standalone, comprehensive solution suitable for industrial-scale applications, for detecting and classifying crystallographic defects in compound wafers, such as 4H-SiC wafers. The effective detection and classification of defects rely on the combination of multiple techniques, leading to increased costs, reduced scalability, and complex or time-consuming workflows.

### Summary of the invention

A purpose of the present invention is to overcome at least one of the drawbacks of the known techniques.

A purpose of the present invention is to propose a solution allowing for accurately detecting critical crystallographic defect types.

Another purpose of the present invention is to propose a solution allowing for further classification of detected crystallographic defects.

Another purpose of the present invention is to propose a solution for detecting and classifying critical crystallographic defect types, implemented as a single, robust, non-invasive method and standalone device.

Still another purpose of the present invention is to propose a solution for detecting and classifying critical crystallographic defect types, providing inspection speed and scalability required for industrial wafer inspection.

Still another purpose of the present invention is to propose a solution for detecting and discriminating some specific crystallographic defects in SiC substrates, and notably 4H-SiC substrates, such as threading edge dislocations (TEDs), threading screw dislocations (TSDs), and threading mixed dislocations (TMDs).

At least one of these aims is achieved by a method for detecting crystallographic defects in a crystalline material such as a semiconductor substrate, the defects generating local anisotropy of optical properties in the crystalline material, the method comprising the following steps:
- illuminating the crystalline material,
- analysing the polarisation of the light issued from the crystalline material by means of at least one polarisation analyser, the at least one polarisation analyser being set according to at least four different polarisation states,
- measuring an intensity spatial distribution of the light in the at least four different polarisation states in a field of view,
- calculating at least Stokes parameters S₂, S₃ based on the measured intensities for the field of view,
- determining a retardance map based on said Stokes parameters S₂, S₃ for the field of view, and
- identifying defects in the crystalline material based on patterns in the retardance map.

The method according to the invention is a crystalline material inspection method based on Stokes polarimetric imaging. The Stokes parameters are determined by acquiring intensity distributions of light, images, for different polarization projections, allowing for the construction of a retardance map that reveals patterns of the optical anisotropies induced by the crystallographic defects. The patterns correspond to distinct optical signatures of each defect that can be interpreted to identify different types of defects.

A direct connection is established between the polarisation information of the light and the optical properties of crystallographic defects in crystalline materials, such as SiC wafers. Each defect type-TEDs, TSDs, TMDs, prismatic slips, and micropipes-modifies the polarisation state of light transmitted through or reflected by the crystalline material in a characteristic manner. This modification is due to local anisotropy variations in the crystalline structure generated by the defects. When light interacts with the defect it experiences the local birefringence of defect generating phase shift or retardance in the light, depending on its polarisation. The defects can thus be identified and localized thanks to polarimetric imaging.

The proposed Stokes polarimetric imaging method offers several distinct advantages that address the limitations of current hybrid and standalone inspection techniques.

The proposed method is a non-invasive solution allowing for accurate defect detection and localization without the need for destructive testing or additional processing steps.

Further, the method according to the invention allows for high throughput thanks to possibility of the inspection of entire wafers with spatially resolved polarisation information. Thus, even wafers with high defect densities can be analysed efficiently, providing comprehensive defect characterization across large areas without compromising on resolution or precision.

The method may be implemented seamlessly with existing semiconductor production workflows, eliminating the need for disruptive changes to established processes. It ensures reliable performance under varying inspection conditions, including diverse defect types, high defect densities, and different wafer sizes. The proposed method also supports real-time data acquisition and processing, thus being adapted for in-line production environments.

The method according to the invention is notably well adapted to detect defects in compound materials with wide bandgap, such as SiC, GaN, etc.

According to an embodiment, the method may further comprise the step of polarising the light issued from the light source such that the crystalline material is illuminated with polarised light.

The illuminating light may be circularly or linearly polarised.

Alternatively, the light emitted by the light source may already be polarised.

It is also possible to use unpolarised light in the method according to the invention.

According to an embodiment, the method may further comprise the step of classifying the identified defects based on patterns in the retardance map.

Once the defects are identified in the retardance map, they can be classified according to different types of defects based on their specific pattern.

The method according to the invention may further comprise the step of determining a map of polarisation-ellipse angles from the Stokes parameters S₁, S₂.

The polarization ellipse represents the state of polarization of light at a given point and can be used to analyse how the polarization state evolves as light traverses the defect region. Changes in the polarization ellipse provide insight into the local optical anisotropies of the crystalline material.

According to an embodiment, the method may further comprise a step of discriminating identified defects based on patterns in the map of polarisation-ellipse angles.

The polarisation-ellipse angle map provides additional information for classifying, or discriminating, different types of defects. It is particularly useful in the case the retardance map does not allow to clearly distinguish between different defects. For example, the combined use of the retardance map and the polarisation-ellipse angle map allows for discriminating TEDs and TMDs.

According to an embodiment, the classifying step and/or the discriminating step may be realized by comparing the patterns with pre-defined patterns representative of defects in the crystalline material.

Alternatively, or additionally, the classifying step and/or the discriminating step may be realized by correlating the patterns with known properties of different types of crystallographic defects.

The known properties, or signatures, may be issued from a database or provided by machine learning.

According to another aspect of the same invention, it is proposed a polarimetric inspection device for detecting crystallographic defects in a crystalline material such as a semiconductor substrate, the defects generating local anisotropy of optical properties in the crystalline material, the device comprising:
- a light source configured for illuminating the crystalline material,
- at least one polarisation analyser configured for analysing the polarisation of the light issued from the crystalline material, at least one polarisation analyser being set to filter or project to at least four different polarisation states,
- a detector configured for measuring an intensity spatial distribution of the light in the at least four different polarisation states in a field of view, and
- signal processing means configured for:
   - calculating at least Stokes parameters S₂, S₃ based on the measured intensities for the field of view,
   - determining a retardance map based on said Stokes parameters S₂, S₃ for the field of view,
   - identifying defects in the crystalline material based on patterns in the retardance map.

The device according to the present invention allows for a detailed analysis of the light's polarisation state at each point within a field of view. Each pixel in the captured image represents the polarisation characteristics of a specific point on the material, or wafer, allowing for the generation of a retardance map with a resolution of a single pixel. The device thus enables precise identification and localization of inhomogeneities or defects.

The device according to the invention reduces the need for resource-intensive setups, since unlike hybrid systems, which often require multiple expensive tools and extensive operational expertise, it constitutes a simple, stand-alone system. This simplification not only minimizes initial capital investment but also decreases ongoing maintenance and operational costs, making the device particularly suitable for industrial applications.

The signal processing means may comprise, in a non-limitative way, a computer, a microprocessor, and/or a controller board, with interfacing hardware such as analogic to digital converters and I/O boards.

According to an embodiment, the device according to the invention may further comprise an illumination polariser for polarising light emitted by the light source such that the crystalline material is illuminated with polarised light.

Alternatively, the light source may already emit polarised light.

The illuminating light may also be unpolarised.

According to an example, the illumination polariser may comprise a linear polariser and a quarter-wave plate being rotatable with respect to each other.

Similarly, the at least one polarisation analyser may comprise a linear polariser and a quarter-wave plate being rotatable with respect to each other.

For example, the quarter-wave plate may be set to specific angles while fixing linear polariser at horizontal axis. This allows for the sequential determination of all Stokes parameters while rotating single optical element.

According to an embodiment, the device may comprise a plurality of polarisation analysers forming a line or a matrix of polarisation analysers, each analyser being oriented according to one of at least four different polarisations, and wherein the detector comprises a plurality of elementary sensors, each elementary sensor being equipped with one of the polarisation analysers.

Advantageously, the plurality of polarisation analysers and the detector may form a full Stokes camera.

In a full Stokes camera, the incoming light may be split into different polarisation state projections and the camera is equipped with differently oriented analysers. Alternatively, such camera may use a dynamic phase element such as liquid crystal cell to filter the four polarization state projections. In first case a full Stokes camera allows for simultaneous in former sequential acquisition of polarisation information, in both cases allowing the reconstruction of Stokes parameters without the need for mechanical displacements and/or rotations of analysers.

Other configurations of the device according to the invention are possible.

For example, temporal or spatial light modulation can be used to modify the polarization state of light during measurement when implemented with polarization-sensitive mechanisms, such as birefringent phase modulation or selective polarization filtering. The implementation of the device may vary based on the desired balance between speed, accuracy, and complexity.

### Description of the figures and embodiments

Other advantages and characteristics will become apparent on examination of the detailed description of an embodiment which is in no way limitative, and the attached figures, where:
- FIGURE 1 is a diagrammatic representation of a non-limitative example of a polarimetric inspection device according to the present invention;
- FIGURE 2 is a diagrammatic representation of a non-limitative example of a polarimetric inspection method according to the present invention;
- FIGURE 3 shows a retardance map obtained with a method and a device according to the present invention; and
- FIGURE 4 shows retardance maps obtained with a method and a device according to the present invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures may keep the same reference.

First, types of crystallographic defects that may be present in compound material wafers are presented.

Threading edge dislocations (TEDs), threading screw dislocations (TSDs), threading mixed dislocations (TMDs), micropipes, and prismatic slips exhibit distinct properties that influence wafer performance and quality, when used for instance in semiconductor industry.

TEDs are characterized by a lateral displacement of atomic planes parallel to the growth direction. These defects are among the most common in SiC wafers, with densities ranging from 10⁴ to 10⁶ defects per square centimetre depending on the substrate quality. TEDs compromise mechanical stability and introduce stress that can propagate into subsequent device layers.

TSDs have helical structure and propagate along the c-axis of the crystal. These defects are detrimental in high-power applications, where their presence directly affects current conduction pathways. TSD densities are typically comparable to those of TEDs but pose greater challenges due to their three-dimensional structural impact. Additionally, TSDs are implicated in the formation of micropipes when their density exceeds a critical threshold.

TMDs represent a combination of edge and screw dislocations. These defects are typically less common but exhibit more complex structures that impact both mechanical and electrical properties. Their mixed nature complicates their classification, as they share characteristics with TEDs and TSDs.

Micropipes, hollow tubular defects, are among the most severe crystallographic defects in SiC wafers. These voids often exceed 1 µm in diameter and disrupt the mechanical integrity of the wafer. Even a single micropipe can render a wafer unsuitable for use in high-power applications. The occurrence of micropipes is relatively rare compared to dislocations but has catastrophic implications when present.

Prismatic slip dislocations occur due to plastic deformation along prismatic planes in the crystal lattice, often triggered by high-temperature processing or mechanical stress. These defects disrupt the crystal's translational symmetry and induce anisotropic stress fields. While less common than threading dislocations, prismatic slips can introduce significant non-uniformities in the wafer, degrading the material's optical and mechanical properties.

Many crystallographic defects may be detected by a local anisotropy of optical properties they induce in the crystalline material. The anisotropy may then be sensed using the Stokes formalism, i.e., by measuring the Stokes vector distribution throughout the field of view.

As an example, in 4H-SiC, defects such as TEDs, micropipes, and prismatic slip dislocations induce stress fields in the crystal plane orthogonal to the c-axis. These stress fields create anisotropic changes in the refractive indices along different orthogonal directions. The resulting birefringence alters the polarisation state of light as it passes through the defect region.

The refractive index changes due to these stress components are expressed through the photo-elastic relation: ${n}_{∥} - {n}_{⊥} = C ⋅ σ ,$ where *n*_{∥} and n_{⊥} are the refractive indices for two orthogonal directions of polarization of the light, respectively, C is the photo-elastic constant of SiC, and σ is the stress tensor component. The resulting retardance Δ, or phase shift, introduced by the birefringence, is proportional to the difference in refractive indices: $Δ = \frac{2 π}{λ} \left({n}_{∥}-{n}_{⊥}\right) d ,$ where λ is the wavelength of the light and d is the defect height.

TMDs, and in particular TSDs, present complex structures. TMDs combine the characteristics of TEDs and TSDs, exhibiting both in-plane shear stresses and helical distortions. TSDs have a helical structure introducing a particularly distinctive optical signature.

TSDs induce azimuthally varying refractive indices in the crystal, analogous to the behaviour of a spiral phase plate. This helical modulation of the refractive index leads to a phase shift that changes continuously around the azimuthal coordinate of the defect. As polarised light interacts with these azimuthally varying local optical axes, it accumulates a spatially dependent phase delay.

The handedness of the TSD's helical structure significantly influences its interaction with circularly polarised light. Right-handed and left-handed TSDs interact differently with right-handed and left-handed circularly polarised light, resulting in selective phase shifts and circular dichroism effects. This interaction creates distinct retardance patterns, which can be visualized as alternating intensity regions in polarisation-linked maps.

TSDs also often occur in pairs with opposite helicities and exhibit mirrored optical signatures. These pairs are a natural consequence of SiC crystal growth dynamics. In a retardance map, this symmetry manifests as complementary retardance and circular dichroism patterns, allowing the paired TSDs to be readily identified and classified.

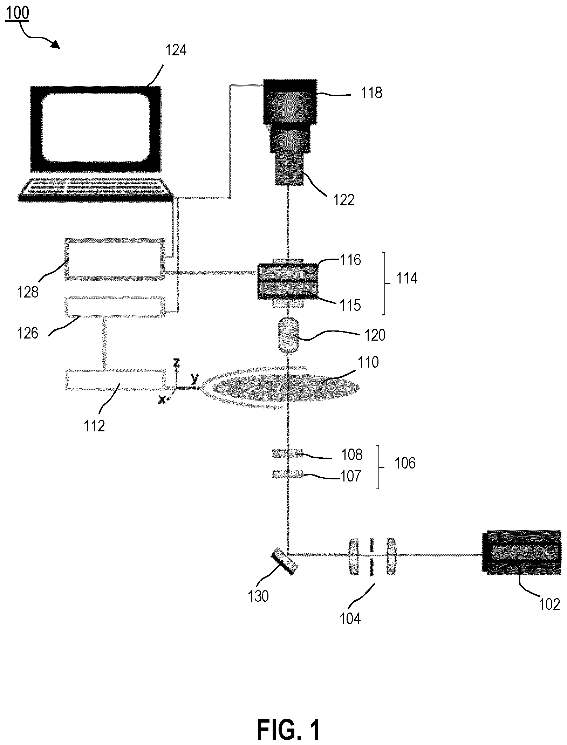

FIGURE 1 is a diagrammatic representation of a non-limitative embodiment of a polarimetric inspection device according to the present invention. More specifically, FIGURE 1 represents an example of a polarimetric imaging device.

The device 100 comprises a light source 102, emitting a light beam directed towards a crystalline material 110, such as a SiC wafer, to be inspected.

The light source is preferably a monochromatic light source, such as a laser within the visible spectrum. Preferably, a short wavelength is used which enhances birefringence sensitivity due to its inverse proportionality to wavelength.

The device 100 also comprises a spatial filter 104, in order to ensure beam quality and uniformity. In the example of FIGURE 1, the spatial filter 104 consists of a pinhole arranged between two lenses.

According to an embodiment, the polarisation state of the incident light beam is controlled by polarising means 106. In the represented example, circularly polarised light is produced. The polarising means 106 comprise a linear polariser 107, for linearly polarising the incident light, followed by a quarter-wave plate 108, for converting the linearly polarised light into circularly polarised light.

Alternatively, the light emitted by the light source can already be polarised, or unpolarised.

In the embodiment as illustrated in FIGURE 1, the sample to be inspected 110, which can be a wafer or a substrate of any shape, is mounted on a displaceable support, such as a motorized stage 112, allowing its translation in the x, y, and z directions. The surface of the sample may thus be scanned by the laser beam.

The device 100 further comprises polarisation analysing means 114, or a polarisation state analyser for analysing the polarisation of the light issued from the crystalline material. In the represented example, the polarisation state analyser 114 comprises a quarter-wave plate 115 and a linear polariser 116.

The polarisation analysing means 114 are mounted on rotational mounts such that the polarisation analysing means may be rotated with respect to the polarising means 106. The rotational mounts are preferably motorized. With this arrangement, the polarisation states of the light can be adjusted in real time for the acquisition of Stokes vector maps. The analyser is configured to ensure beam stability during rotation, thus minimizing alignment errors and maximizing data reliability.

The device 100 comprises a camera 118 as an optical sensor or detector, or image sensor. The camera 118 is configured to capture the intensities of the light issued from the wafer 110 in different polarisation states of the light. Polarisation images are acquired by the camera 118.

The device 100 according to the embodiment represented in FIGURE 1 also comprises imaging means in order to image the wafer 110 to be inspected onto the camera 118 in different polarisation conditions. The imaging means comprise an objective 120 to form an image, and a tube lens 122 to focus the light onto the camera 118. The imaging means constitute an infinity-corrected microscope.

The device 100 according to the invention further comprises signalprocessing means such as a processing module 124. The processing module 124 may comprise, in a non-limitative way, a computer, a microprocessor, a controller board, with interfacing hardware such as analogic to digital converters and I/O boards. The processing means are configured to process the acquired polarisation image(s) in order to calculate Stokes parameters from the measured intensities, and process the Stokes parameters allowing for the identification of defects in the crystalline material.

Advantageously, the device 100 also comprises a controller 126 for the displaceable support 112. As illustrated in FIGURE 1, this controller 126 is implemented as a separate device that may be controlled by the processing module 124. Alternatively, it may also be directly implemented with the processing module.

The device 100, as represented in FIGURE 1, further comprises a controller 128 for the rotational mounts of the polarisation analyser 106. This controller 128 is also implemented as a separate device that may be controlled by the processing module 124. Alternatively, it may also be directly implemented with the processing module.

In the example device as illustrated in FIGURE 1, the measurement or inspection is done in transmission. Measurement arrangements in a reflection geometry are also possible.

In the example device as illustrated in FIGURE 1, the acquisition of the measurements is done with a camera 118 with a matrix sensor, allowing the acquisition of a 2D image. Of course, other sensors such as line sensors or point sensors can be used, and an image can be created by scanning the surface of the sample 110.

In the example illustrated in Figure 1, the device also comprises a mirror 130 for light direction purposes.

Advantageously, the device as described with reference to FIGURE 1 comprises optical components, a light source, and a detector optimized to enhance birefringence and circular dichroism effects while ensuring compatibility with wafers such as SiC wafer transparency.

The device 100 is configured for high-throughput wafer inspection, incorporating a laser source, spatial filtering, an infinity-corrected microscope, and automated components for precision and efficiency.

The device 100 may be implemented in a method according to the invention, in order to identify crystallographic defects in a crystalline material, such as a wafer, based on the measurement of Stokes parameters of the light issued from the material.

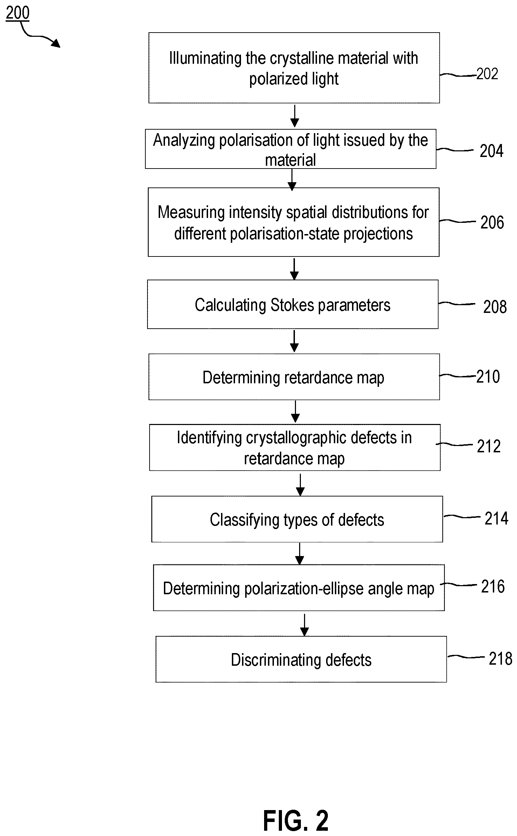

FIGURE 2 is a diagrammatic representation of a non-limitative example of a method according to the present invention. The method may be carried out by a device according to the invention, and in particular by the polarimetric imaging device 100 as represented in FIGURE 1.

The method 200, as illustrated in FIGURE 2, may be used to detect and classify different defects creating an anisotropy in a crystalline material.

The crystalline material is illuminated in an illumination step 202 by polarised light. The polarised light interacts with the crystalline material by transmission or reflection. The light is, for example, linearly or circularly polarised.

In order to set or control the polarisation of the light, and in reference to the device as represented in FIGURE 1, the quarter-wave plate of the polarisation means may be rotated to specific angles such that different delays are introduced between polarisation components of the light.

Of course, other polarisation control means may be implemented to polarise the light.

In particular, the light emitted by the light source may already be polarised such that no additional polarising means are necessary to implement the method according to the invention.

Alternatively, it is also possible to use unpolarised light in the method according to the invention.

The polarised light is then transmitted through or reflected by the crystalline material to be inspected.

In an analysing step 204, the polarisation of the light issued from the crystalline material is analysed using polarisation analysing means, to determine the resulting polarisation state. In reference to the embodiment of the device as illustrated in FIGURE 1, the polarisation may be analysed using a quarter-wave plate and a linear polariser that are rotatable with respect to each other. The analyser is set according to at least four different polarisation states.

The method 200 comprises a measurement step 206 during which intensity spatial distributions projected in different polarisation states are measured using an optical detector. The intensities are measured in a field of view. The field of view may be zero-, one- or two-dimensional, i.e., consists of a point, line or a 2D map. Indeed, all these kinds of fields of view allow for identifying patterns as detailed below.

The field of view can be covered sequentially by realizing a point or line scan. A two-dimensional field of view can be acquired at once with a two-dimensional detector, such as a camera.

During a calculation step 208, the Stokes parameters of the light issued from the crystalline material are calculated based on the measured intensities in the different polarisation states.

The Stokes parameters, building a Stokes vector in each measurement point, are as follows:
- S₀: total light intensity, which can provide baseline data for normalization,
- S₁, S₂: linear polarisation state projections, revealing birefringence effects caused by orthogonal refractive index changes in orthogonal directions of linear polarization,
- S₃: circular polarisation state projections, highlighting circular dichroism and chirality effects (which are specific to TSDs).

In particular, the Stokes parameters may be calculated using the following equations: ${S}_{0} = I \left(0, 0\right) + I \left(90, 0\right)$ ${S}_{1} = I \left(0, 0\right) - I \left(90, 0\right)$ ${S}_{2} = I \left(45, 0\right) - I \left(135, 0\right)$ ${S}_{3} = I \left(0, 45\right) - I \left(90, 45\right)$

The measured intensity values can be written as I(θ,φ), where θ is a rotation angle of the linear polariser of the analysing means with respect to an axis, and φ is the phase shift in the quarter-wave plate, i.e., a rotation angle φ with respect to that axis.

S₀ represents the total irradiance of the light issued from the wafer and arriving on the detector, S₁ describes the preponderance of the horizontal versus vertical linear polarisation states, S₂ describes the preponderance of 45° diagonal linear polarisation over the 135° polarisation, and S₃ describes the preponderance of right-handed circular polarisation over left-handed circular polarisation.

If the full Stokes parameter set is to be calculated, at least six different polarisation analyser positions are thus necessary. Spatially resolved Stokes vectors are thus reconstructed over the field of view.

In the method according to the invention, and in order to determine a retardance map, four different polarisation states are sufficient. In this case, the S₂ and S₃ Stokes parameters are calculated from the measured intensities.

In step 210, a retardance map is determined based on the S₂ and S₃ Stokes parameters for the measured field of view. The retardance map shows the retardance, or phase shift, introduced between two orthogonal polarisations by a defect generating local anisotropy of the crystalline structure, leading to an optical birefringence.

The retardance Δ, or phase delay, introduced by birefringence, is calculated directly from the S₂ and S₃ Stokes parameters: $Δ = arctan \left(\frac{{S}_{3}}{{S}_{2}}\right) .$

This retardance value is calculated and mapped for the measured field of view, i.e., pixel by pixel. The obtained retardance map represents a detailed visualization of the influence of crystallographic defects on the polarisation state of the light.

In an identification step 212, crystallographic defects are identified in the retardance map thanks to specific patterns, or signatures, present in the map, appearing as localized features distinct from the rest of the retardance map.

The form of the one or more characteristic patterns in the retardance map depends on the type(s) of defects(s) present in the crystalline material or wafer.

The method, according to the embodiment as represented in FIGURE 2, further comprises a step 214 of classifying the identified defects. The classifying is carried out based on the patterns in the retardance map.

The classifying step 214 can comprise a step of comparing the discovered patterns in the retardance map with pre-defined patterns representative of defects in the crystalline material. That comparison can be carried out by using known signal processing methods, and/or a machine learning-lased method trained on identified defect patterns.

The classifying step 214 can also comprise a step of correlating the patterns with known properties of different types of crystallographic defects, i.e., to their known optical signatures. These known properties or signature can also be used to generate pre-defined patterns representative of defects in the crystalline material, to be compared with the measured or discovered patterns.

Examples of types of crystallographic defects and their appearance in the retardance map are as follows:
- TEDs, micropipes, and prismatic slips: Stress-induced birefringence produces alternating bright and dark zones in the retardance map, reflecting the distribution of stress fields around the defect.
- TSDs: Their helical structure induce phase shifts and depolarisation, thereby introduces azimuthally varying retardance patterns, forming a spiral-like signature in the retardance map.

The retardance maps thus allow for the localization and classification of different crystallographic defects.

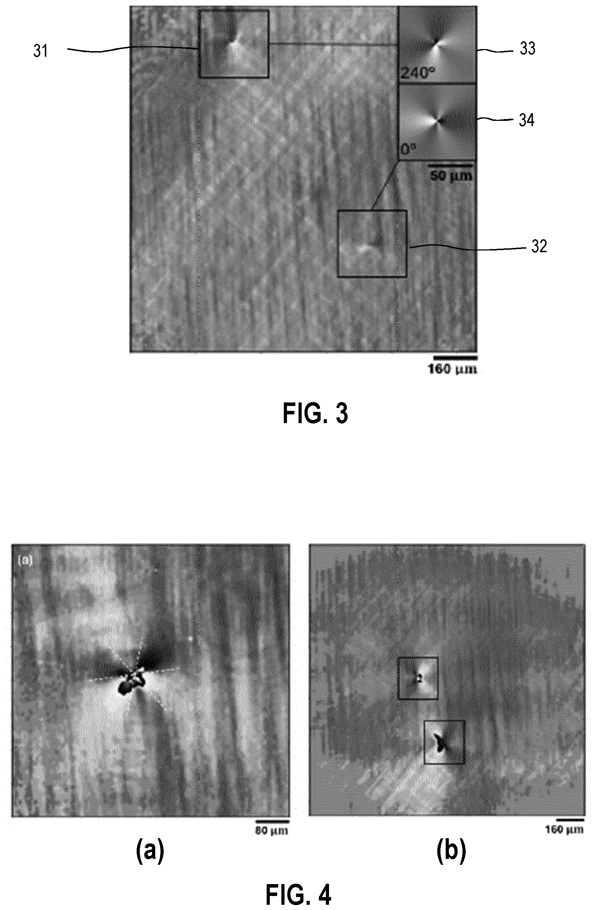

FIGURES 3 and 4 show examples of retardance maps of obtained with defects on SiC wafers. They are obtained with the set-up 100, with the polarising means 106 adjusted to illuminate the sample with a circularly polarized light.

In FIGURE 3, the retardance map reveals the stress-induced birefringence caused by TEDs. TEDs generate in-plane shear stress fields, which alter the polarisation state of transmitted light in the surroundings of the defect. These stress fields produce alternating bright and dark retardance patterns that can be distinguished in FIGURE 3. The two areas 31, 32 highlight a TED-extended effect. The inset squares 33, 34 in the upper right corner show simulations of stress induced effects or signatures in orientations corresponding to these of the detected defects.

The retardance maps extend up to 80 µm from the dislocation core, with patterns qualitatively matching the theoretical stress field distribution pattern. These alternating regions allow precise localization and classification of TEDs.

In FIGURE 4, the retardance maps show patterns caused by TSDs. These patterns are distinct from TED patterns as shown in FIGURE 3. TSDs, due to their helical structure, interact with circularly polarised light in a manner that depends on the match or mismatch between the helicity of the light and the dislocation chirality. This interaction results in alternating intensity distinctive retardance patterns.

FIGURE 4(a) shows a pattern induced by a TSD defect. The presence of darker sub-lobes within bright lobes in the retardance map highlights regions where circular dichroism effects are most pronounced. The dotted lines 41 are drawn to highlight the pattern.

FIGURE 4(b) shows paired TSDs with opposite Burgers vectors, which is a common phenomenon in SiC crystal growth. The two TSDs display symmetrical retardance patterns. These pairs arise from growth misalignments and exhibit mirrored optical signatures, confirming their orientation and nature. The squares are drawn to highlight the extended effect of each TSD defect of the pair.

The method, according to the embodiment as represented in FIGURE 2, can optionally and in addition comprises a step 216 of determining a map of polarisation-ellipse angles map from the Stokes parameters S₁ and S₂.

The orientation angle ψ of the polarisation ellipse can be derived from the S₁ and S₂ Stokes parameters as follows: $Ψ = \frac{1}{2} arctan \left(\frac{{S}_{2}}{{S}_{1}}\right) .$

The orientation angle follows the alignment of the local optical axis in the crystalline material, which can vary due to defect-induced stress fields. The orientation angle ψ lies at a ± ° 45 angle from the local optical axis angle, depending on the actual values of the birefringent phase retardation and the polarisation handedness of the illuminating light.

The polarisation ellipse angles are determined and mapped for the measured field of view, i.e., pixel by pixel.

In an optional discrimination step 218 of the method 200 according to an embodiment, the polarisation-ellipse angle map is used to discriminate crystallographic defects. The use of the polarisation-ellipse map is particularly useful to provide further information for the defect identification and characterization. For example, this map may be used to discriminate defects that may not have been distinguished in the retardance map.

The discrimination step 218 is carried out by comparing the discovered patterns in the retardance map with pre-defined patterns representative of defects in the crystalline material. That comparison can be carried out by using known signal processing methods, and/or a machine learning-lased method trained on identified defect patterns.

The classifying step 218 can also comprise a step of correlating the patterns with known properties of different types of crystallographic defects, i.e., to their known optical signatures. These known properties or signature can also be used to generate pre-defined patterns representative of defects in the crystalline material, to be compared with the measured or discovered patterns.

Examples of types of crystallographic defects and their appearance in the polarisation-ellipse angle map are as follows:
- TEDs and prismatic slips: The alignment of the local optical axis changes radially and azimuthally, creating distinct patterns in the polarisation-ellipse angles that correlate with the stress field symmetry.
- TSDs: The azimuthally local optical axis orientation, resulting in a continuous rotation of the polarisation ellipse. This behaviour is analogous to the effect of a spiral phase plate and serves as a direct optical indicator of the TSD's chirality, and thus of the TSD's presence.

The combination of retardance and polarisation-ellipse angle maps allows for a more complete defect detection and classification than the use of a retardance map alone.

Examples of types of crystallographic defects and their combined appearance in the retardance polarisation-ellipse angle maps are as follows:
- TEDs: Alternating retardance patterns and predictable changes in polarisation-ellipse orientation along with their spatial distribution scale reflect the shear stress field.
- Micropipes and prismatic slips: Diffuse retardance zones with irregular polarisation ellipse patterns indicate depolarisation effects, revealed both in retardance map *ψ* map.
- TSDs: Spiral retardance patterns and rotationally varying polarisation ellipses confirm the helical structure and chirality.

Of course, the invention is not limited to the examples detailed above.

## Claims

1. A method (200) for detecting crystallographic defects in a crystalline material such as a semiconductor substrate, the defects generating local anisotropy of optical properties in the crystalline material, the method comprising the following steps:
- illuminating (202) the crystalline material,
- analysing (204) the polarisation of the light issued from the crystalline material by means of at least one polarisation analyser, the at least one polarisation analyser being set according to at least four different polarisation states,
- measuring (206) an intensity spatial distribution of the light in the at least four different polarisation states in a field of view,
- calculating (208) at least Stokes parameters S₂, S₃ based on the measured luminous intensities for the field of view,
- determining (210) a retardance map based on said Stokes parameters S₂, S₃ for the field of view, and
- identifying (212) defects in the crystalline material based on patterns in the retardance map.

2. The method (200) according to claim 1, further comprising the step of polarising the light issued from the light source such that the crystalline material is illuminated with polarised light.

3. The method (200) according to the preceding claim, wherein the illuminating light is circularly or linearly polarised.

4. The method (200) according to the preceding claim, further comprising the step (214) of classifying the identified defects based on patterns in the retardance map.

5. The method (200) according to any one of the preceding claims, further comprising the step (216) of determining a map of polarisation-ellipse angles from the Stokes parameters S₁, S₂.

6. The method (200) according to the preceding claim, further comprising a step (218) of discriminating identified defects based on patterns in the map of polarisation-ellipse angles.

7. The method (200) according to claims 4 to 6, wherein the classifying step (214) and/or the discriminating step (218) is realized by comparing the patterns with pre-defined patterns representative of defects in the crystalline material.

8. The method (200) according to claims 4 to 7, wherein the classifying step (214) and/or the discriminating step (218) is realized by correlating the patterns with known properties of different types of crystallographic defects.

9. A polarimetric inspection device (100) for detecting crystallographic defects in a crystalline material (110) such as a semiconductor substrate, the defects generating local anisotropy of optical properties in the crystalline material, the device (100) comprising:
- a light source (102) configured for illuminating the crystalline material (110),
- at least one polarisation analyser (114) configured for analysing the polarisation of the light issued from the crystalline material (110), the at least one polarisation analyser (114) being set according to at least four different polarisation states,
- a detector (118) configured for measuring an intensity of the light in the at least four different polarisation states in a field of view,
- signal processing means (124) configured for:
▪ calculating at least Stokes parameters S₂, S₃ based on the measured luminous intensities for the field of view,
▪ determining a retardance map based on said Stokes parameters S₂, S₃ for the field of view,
▪ identifying defects in the crystalline material (110) based on patterns in the retardance map.

10. The device (100) according to claim 9, further comprising an illumination polariser (106) for polarising light emitted by the light source (102) such that the crystalline material (110) is illuminated with polarised light.

11. The device (100) according to claim 10, wherein the illumination polariser (106) comprises a linear polariser (107) and a quarter-wave plate (108) being rotatable with respect to each other.

12. The device (100) according to any one of claims 9 to 11, wherein the at least one polarisation analyser (114) comprises a linear polariser (116) and a quarter-wave plate (115) being rotatable with respect to each other.

13. The device (100) according to claim 9 or 10, comprising a plurality of polarisation analysers forming a line or a matrix of polarisation analysers, each analyser being oriented according to one of at least four different polarisations, and wherein the detector comprises a plurality of elementary sensors, each elementary sensor being equipped with one of the polarisation analysers.

14. The device (100) according to claim 13, wherein the plurality of polarisation analysers and the detector form a full Stokes camera.
